(19) Europäisches Patentamt
European Patent Office
Office européen des brevets

(11) **EP 4 047 513 A1**

(12) **EUROPÄISCHE PATENTANMELDUNG**

(43) Veröffentlichungstag:
**24.08.2022 Patentblatt 2022/34**

(21) Anmeldenummer: **21157782.0**

(22) Anmeldetag: **18.02.2021**

(51) Internationale Patentklassifikation (IPC):
**G06K 9/00** (2022.01)  **G06Q 50/02** (2012.01)
**G06Q 10/04** (2012.01)

(52) Gemeinsame Patentklassifikation (CPC):
**G06Q 50/02; G06Q 10/04; G06V 20/188**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Pfeifer & Langen GmbH & Co. KG 50858 Köln (DE)**

(72) Erfinder:
• **Luyven, Simon**
  **47665 Sonsbeck (DE)**
• **Schilasky, Sören**
  **50937 Köln (DE)**

(74) Vertreter: **Kutzenberger Wolff & Partner Waidmarkt 11 50676 Köln (DE)**

(54) **VERFAHREN UND SYSTEM ZUR AUSWAHL EINES ODER MEHRERER TEILBEREICHE EINES LANDWIRTSCHAFTLICHEN SCHLAGS FÜR EINE PROBENAHME VON BIOMASSE SOWIE VERFAHREN ZUR VORHERSAGE EINES ERTRAGS EINES LANDWIRTSCHAFTLICHEN SCHLAGS**

(57)     Die vorliegende Erfindung betrifft ein Verfahren zur Auswahl eines oder mehrerer Teilbereiche eines landwirtschaftlichen Schlags für eine Probenahme von Biomasse mit folgenden Verfahrensschritten:

- Bereitstellen von Satellitenbilddaten (11) des Schlags zu mindestens einem ersten, beispielsweise aktuellen, Zeitpunkt und mindestens einem zweiten, beispielsweise historischen, Zeitpunkt,

- Ermitteln jeweils eines ersten Vegetationsindexwerts (12) für mehrere, insbesondere sämtliche, Teilbereiche des Schlags anhand der Satellitenbilddaten des mindestens einen ersten Zeitpunkts,

- Ermitteln jeweils eines zweiten Vegetationsindexwerts (13) für die Teilbereiche des Schlags anhand der Satellitenbilddaten des mindestens einen zweiten Zeitpunkts,

- Ermitteln eines Kennwerts der zeitlichen Stabilität (14) des Vegetationsindex für die Teilbereiche des Schlags,

- Auswählen (15) solcher Teilbereiche des Schlags, die kumulativ folgende Voraussetzungen erfüllen:

◦ der erste Vegetationsindexwert liegt in einem vorgegebenen ersten Auswahl-Wertebereich,

◦ der zweite Vegetationsindexwert liegt in einem vorgegebenen zweiten Auswahl-Wertbereich,

◦ der Kennwert der zeitlichen Stabilität liegt in einem vorgegebenen dritten Auswahl-Wertbereich;
und

- Anzeigen (16) der ausgewählten Teilbereiche in einer Anzeigevorrichtung (114), insbesondere eines mobilen Endgeräts (110).

Fig. 1

**Beschreibung**

**Stand der Technik**

Die vorliegende Erfindung betrifft ein Verfahren zur Auswahl eines oder mehrerer Teilbereiche eines landwirtschaftlichen Schlags für eine Probenahme von Biomasse. Ein weiterer Gegenstand der Erfindung ist ein System zur Auswahl eines oder mehrerer Teilbereiche eines landwirtschaftlichen Schlags für eine Probenahme von Biomasse mit einer Prozessoreinrichtung. Die Erfindung betrifft ferner ein Verfahren zur Vorhersage eines Ertrags eines landwirtschaftlichen Schlags.

Unter einem landwirtschaftlichen Schlag wird eine zusammenhängende Fläche verstanden, die grundsätzlich einheitlich mit einer Pflanzenart, beispielsweise mit Zuckerrüben, bebaut wird. Zur Voraussage des Ertrags eines solchen Schlags wird üblicherweise in einem ausgewählten Teilbereich des Schlags eine Probe von Biomasse entnommen. Bei Kulturpflanzen, insbesondere Zuckerrüben, wird eine solche Probenahme oftmals als Proberodung bezeichnet. Anhand der entnommenen Biomasse kann dann ein voraussichtlicher Ertrag des Schlags berechnet werden.

Bei einem derartigen Voraussageverfahren kommt der Auswahl der Bereiche zur Probenahme innerhalb des Schlags eine besondere Bedeutung zu, denn die Qualität der Ertragsvoraussage hängt stark davon ab, wie repräsentativ die für die Probenahme ausgewählten Teilbereiche für den jeweiligen Schlag sind.

**Offenbarung der Erfindung**

Vor diesem Hintergrund ist es Aufgabe der vorliegenden Erfindung, die Vorhersage des landwirtschaftlichen Ertrags eines Schlags bei einem Verfahren zu verbessern, bei welchem anhand der entnommenen Biomasse ein voraussichtlicher Ertrag des Schlags berechnet wird.

Zur Lösung der Aufgabe wird ein Verfahren zur Auswahl eines oder mehrerer Teilbereiche eines landwirtschaftlichen Schlags für eine Probenahme von Biomasse gemäß Patentanspruch 1 vorgeschlagen. Dieses Verfahren umfasst die folgenden Verfahrensschritte:

- Bereitstellen von Satellitenbilddaten des Schlags zu einem ersten, beispielsweise aktuellen, Zeitpunkt und mindestens einem zweiten, beispielsweise historischen, Zeitpunkt,
- Ermitteln jeweils eines ersten Vegetationsindexwerts für mehrere, insbesondere sämtliche, Teilbereiche des Schlags anhand der Satellitenbilddaten des ersten Zeitpunkts,
- Ermitteln jeweils eines zweiten Vegetationsindexwerts für die Teilbereiche des Schlags anhand der Satellitenbilddaten des mindestens einen zweiten Zeitpunkts,
- Ermitteln eines Kennwerts der zeitlichen Stabilität des Vegetationsindex für die Teilbereiche des Schlags,
- Auswählen solcher Teilbereiche des Schlags, die kumulativ folgende Voraussetzungen erfüllen:

  - der erste Vegetationsindexwert liegt in einem vorgegebenen ersten Auswahl-Wertebereich,
  - der zweite Vegetationsindexwert liegt in einem vorgegebenen zweiten Auswahl-Wertbereich,
  - der Kennwert der zeitlichen Stabilität liegt in einem vorgegebenen dritten Auswahl-Wertbereich;

  und
- Anzeigen der ausgewählten Teilbereiche in einer Anzeigevorrichtung, insbesondere eines mobilen Endgeräts.

Zur Lösung der Aufgabe wird ferner ein System zur Auswahl eines oder mehrerer Teilbereiche eines landwirtschaftlichen Schlags für eine Probenahme von Biomasse mit einer Prozessoreinrichtung vorgeschlagen, die dazu konfiguriert ist:

- Satellitenbilddaten des Schlags zu einem ersten, beispielsweise aktuellen, Zeitpunkt und mindestens einem zweiten, beispielsweise historischen, Zeitpunkt zu erhalten,
- anhand der Satellitenbilddaten des ersten Zeitpunkts jeweils einen ersten Vegetationsindexwert für mehrere, insbesondere sämtliche, Teilbereiche des Schlags zu ermitteln,
- anhand der Satellitenbilddaten des mindestens einen zweiten Zeitpunkts jeweils einen zweiten Vegetationsindexwert für die Teilbereiche des Schlags zu ermitteln,
- einen Kennwert der zeitlichen Stabilität des Vegetationsindex für die Teilbereiche des Schlags zu ermitteln,
- solcher Teilbereiche des Schlags auszuwählen, die kumulativ folgende Voraussetzungen erfüllen:

  ○ der erste Vegetationsindexwert liegt in einem vorgegebenen ersten Auswahl-Wertebereich,
  ○ der zweite Vegetationsindexwert liegt in einem vorgegebenen zweiten Auswahl-Wertbereich,
  ○ der Kennwert der zeitlichen Stabilität liegt in einem vorgegebenen dritten Auswahl-Wertbereich,

- und mit einer Anzeigeeinrichtung, die dazu konfiguriert ist, die ausgewählten Teilbereiche anzuzeigen.

Gemäß der Erfindung wird anhand von Satellitenbilddaten des Schlags zu dem ersten Zeitpunkt jeweils für mehrere Teilbereiche des Schlags ein erster Vegetationsindexwert ermittelt. Zusätzlich wird anhand von Satellitenbilddaten des Schlags zu dem zweiten Zeitpunkt für die Teilbereiche des Schlags jeweils ein zweiter Vegetationsindexwert ermittelt. Der erste und der zweite Vegetationsindexwert kann ein Maß für die Produktivität bzw. den Ertrag in dem jeweiligen Teilbereich des Schlags sein. Diesem Vorgehen liegt die Überlegung zugrunde, dass sich aus der zu einem Zeitpunkt oder über einen Zeitraum sichtbaren oberirdischen Biomasse der Ertrag ableiten lässt. Zudem wird für die Teilbereiche des Schlags ein Kennwert der zeitlichen Stabilität des Vegetationsindex ermittelt. Die Auswahl von Teilbereichen, welche die oben genannten Voraussetzungen kumulativ erfüllen, ermöglicht das Auffinden solcher Teilbereiche, deren Vegetationsindexwert einen repräsentativen Mittelwert für den Schlag einnimmt, wobei der Vegetationsindexwert eine vorgegebene zeitliche Stabilität, insbesondere über mehrere Jahre, aufweist. Die ausgewählten Teilbereiche werden in einer Anzeigevorrichtung, insbesondere eines mobilen Endgeräts, angezeigt, so dass ein Benutzer der Anzeigevorrichtung die Probenahme in den ausgewählten Teilbereichen des Schlags vornehmen kann. Durch das erfindungsgemäße Verfahren und das erfindungsgemäße System kann eine für den jeweiligen Schlag möglichst repräsentative Auswahl der Bereiche für die Probenahme ermöglicht werden. Hierdurch wird die Genauigkeit der Vorhersage des landwirtschaftlichen Ertrags auf Basis der Probenahme verbessert.

Die Satellitenbilddaten können spektralaufgelöste Satellitenbilddaten sein, insbesondere im nah-infraroten und/oder roten Spektralbereich. Die Satellitenbilddaten umfassen bevorzugt jeweils einen Reflexionswert der Erdoberfläche im Nahinfrarotband und im roten Band. Die Satellitenbilddaten weisen bevorzugt eine Auflösung mit einer Pixelgröße mit 5 m Kantenlänge oder mit 10 m Kantenlänge auf.

Bevorzugt liegen der mindestens eine erste und der mindestens eine zweite Zeitpunkt ein oder mehrere Jahre auseinander. Besonders bevorzugt weisen der mindestens eine erste und der mindestens eine zweite Zeitpunkt einen zeitlichen Abstand voneinander auf, der im Wesentlichen genau ein Jahr oder im Wesentlichen genau ein Vielfaches eines Jahres ist. Durch eine derartige Wahl des zeitlichen Abstands können vergleichbare Zeitpunkte im Wachstum der Biomasse in verschiedenen Jahren miteinander zur Auswahl der Teilbereiche für die Probenahme herangezogen werden.

Die Anzeige der ausgewählten Teilbereiche kann nach Art einer heat map erfolgen. Beispielsweise können die ausgewählten Teilbereiche in einer Kartendarstellung des Schlags mit einer oder mehreren vorgegebenen Farben eingefärbt werden.

Gemäß einer vorteilhaften Ausgestaltung der Erfindung ist vorgesehen, dass der erste Auswahl-Wertebereich nach unten begrenzt ist durch einen ersten unteren Schwellenwert und nach oben begrenzt ist durch einen ersten oberen Schwellenwert,

wobei ein Verhältnis des ersten unteren Schwellenwerts zu einem maximalen ersten Vegetationsindexwert des Schlags größer ist als 0,2, bevorzugt größer ist als 0,25, besonders bevorzugt größer ist als 0,3, beispielsweise 0,33 ist, und
wobei ein Verhältnis des ersten oberen Schwellenwerts zu einem maximalen ersten Vegetationsindexwert des Schlags kleiner ist als 0,8, bevorzugt kleiner ist als 0,75, besonders bevorzugt kleiner ist als 0,7, beispielsweise 0,66 ist.

Eine vorteilhafte Ausgestaltung der Erfindung sieht alternativ oder zusätzlich vor, dass der zweite Auswahl-Wertebereich nach unten begrenzt ist durch einen zweiten unteren Schwellenwert und nach oben begrenzt ist durch einen zweiten oberen Schwellenwert,

wobei ein Verhältnis des zweiten unteren Schwellenwerts zu einem maximalen zweiten Vegetationsindexwert des Schlags größer ist als 0,2, bevorzugt größer ist als 0,25, besonders bevorzugt größer ist als 0,3, beispielsweise 0,33 ist, und
wobei ein Verhältnis des zweiten oberen Schwellenwerts zu einem maximalen zweiten Vegetationsindexwert des Schlags kleiner ist als 0,8, bevorzugt kleiner ist als 0,75, besonders bevorzugt kleiner ist als 0,7, beispielsweise 0,66 ist.

Durch eine derartige Wahl des ersten und/oder zweiten Auswahl-Wertebereichs können Teilbereiche des Schlags ermittelt werden, deren Vegetationsindexwert in einem mittleren Wertebereich eines gesamten Wertebereichs des Schlags liegt. Solche mittleren Werte werden als repräsentativ für den gesamten Schlag angesehen. Dabei werden zur Auswertung nicht die absoluten Werte des Vegetationsindex herangezogen, sondern relative Werte in Bezug auf den maximalen Vegetationsindexwert des Schlags.

Gemäß einer vorteilhaften Ausgestaltung ist alternativ oder zusätzlich vorgesehen, dass der dritte Auswahl-Wertebereich nach unten begrenzt ist durch einen dritten unteren Schwellenwert und nach oben begrenzt ist durch einen dritten oberen Schwellenwert,

wobei ein Verhältnis des dritten unteren Schwellenwerts zu einem maximalen Kennwert der zeitlichen Stabilität des Schlags größer ist als 0,5, bevorzugt größer ist als 0,6, besonders bevorzugt größer ist als 0,65, beispielsweise 0,66 ist, und
wobei ein Verhältnis des dritten oberen Schwellenwerts zu einem maximalen Kennwert der zeitlichen Stabilität des Schlags größer ist als 0,8, bevorzugt größer ist als 0,9, besonders bevorzugt größer ist als 0,95, beispielsweise 1 ist. Durch eine derartige Wahl des dritten Auswahl-Wertebereichs können solche Teilbereiche des Schlags ermittelt werden, deren Kennwert der zeitlichen Stabilität besonders hoch ist. Solche Teilbereiche werden als besonders geeignet für die Ermittlung repräsentativer Teilbereiche eines Schlags angesehen.

Als besonders geeignet für das erfindungsgemäße Verfahren und System hat sich eine Ausgestaltung erwiesen, bei welcher der erste Vegetationsindexwert und/oder der zweite Vegetationsindexwert gemäß der Definition des Enhanced Vegetation Index 2 (EVI2) ermittelt wird, wobei für den EVI2 insbesondere gilt:

$$EVI2 = 2{,}4 \cdot \frac{NIR - RED}{NIR + RED + 1,}$$

wobei NIR und RED jeweils der Reflexionswert der Erdoberfläche im Nahinfrarotband (NIR) und im roten Band (RED) sind, insbesondere unter vollständiger oder teilweiser Korrektur der Rayleigh- und Ozonabsorption.

Als vorteilhaft hat es sich eine Ausgestaltung erwiesen, bei welcher Satellitenbilddaten zu mindestens zwei, bevorzugt mindestens fünf, besonders bevorzugt mindestens zehn, ersten Zeitpunkten bereitgestellt werden und der zweite Vegetationsindexwert anhand von Satellitenbilddaten von den mindestens zwei, bevorzugt mindestens fünf, besonders bevorzugt mindestens zehn, ersten Zeitpunkten, ermittelt wird. Insofern kann der erste Vegetationsindexwert ein Maß für die Produktivität bzw. den Ertrag in dem jeweiligen Teilbereich des Schlags über einen vorgegebenen Zeitraum mehrerer erster Zeitpunkte sein. Die ersten Zeitpunkte liegen bevorzugt innerhalb ein und derselben Vegetationsperiode des Schlags, beispielsweise innerhalb eines Jahres. Unter der Vegetationsperiode wird die Zeitspanne verstanden, in der die Pflanzenart des Schlags aktiv wächst und sich entfaltet. Bei der Vegetationsperiode handelt es sich bevorzugt um die aktuelle Vegetationsperiode des Schlags. Bei einer solchen Ausgestaltung, bei welcher der erste Vegetationsindexwert anhand von Satellitenbilddaten von mindestens zwei ersten Zeitpunkten ermittelt wird, wird eine größere Datenbasis für die Auswahl repräsentativer Bereiche bereitgestellt und damit eine verbesserte Qualität der Ertragsvoraussage ermöglicht. Der erste Vegetationsindexwert kann in einem solchen Fall als Mittelwert der Vegetationsindexwerte der mindestens zwei oder mehr ersten Zeitpunkte gebildet werden.

Bevorzugt ist alternativ oder zusätzlich eine Ausgestaltung, bei welcher Satellitenbilddaten zu mindestens zwei, bevorzugt mindestens fünf, besonders bevorzugt mindestens zehn, zweiten Zeitpunkten bereitgestellt werden und der zweite Vegetationsindexwert anhand von Satellitenbilddaten von den mindestens zwei, bevorzugt mindestens fünf, besonders bevorzugt mindestens zehn, zweiten Zeitpunkten, ermittelt wird. Insofern kann der zweite Vegetationsindexwert ein Maß für die Produktivität bzw. den Ertrag in dem jeweiligen Teilbereich des Schlags über einen vorgegebenen Zeitraum, insbesondere einen Zeitraum mehrerer Jahre, sein. Die zweiten Zeitpunkte liegen bevorzugt in unterschiedlichen Vegetationsperioden des Schlags, beispielsweise in unterschiedlichen Jahren. Unter unterschiedlichen Vegetationsperioden werden solche Vegetationsperioden der Pflanzen des Schlags verstanden, die durch mindestens eine Phase der Vegetationsruhe voneinander getrennt sind. Bei den unterschiedlichen Vegetationsperioden handelt es sich bevorzugt um historische Vegetationsperioden des Schlags, also der aktuellen Vegetationsperiode vorausgehende, bereits vergangene Vegetationsperioden. Bei einer solchen Ausgestaltung, bei welcher der zweite Vegetationsindexwert anhand von Satellitenbilddaten von mindestens zwei zweiten Zeitpunkten ermittelt wird, wird eine größere Datenbasis für die Auswahl repräsentativer Bereiche bereitgestellt und damit eine verbesserte Qualität der Ertragsvoraussage ermöglicht. Der zweite Vegetationsindexwert kann in einem solchen Fall als Mittelwert der Vegetationsindexwerte der mindestens zwei oder mehr zweiten Zeitpunkte gebildet werden.

Vorteilhaft ist es ferner eine Ausgestaltung des Verfahrens und Systems, bei welcher der Kennwert der zeitlichen Stabilität des Vegetationsindex anhand der Satellitenbilddaten des Schlags zu dem einen oder den mehreren ersten Zeitpunkten und der Satellitenbilddaten des Schlags zu dem einen oder den mehreren zweiten Zeitpunkten ermittelt wird. Zur Ermittlung des Kennwerts der zeitlichen Stabilität kann die Abweichung der einzelnen Vegetationsindexwerte des ersten und des einen oder der mehreren zweiten Zeitpunkte voneinander ermittelt werden. Bevorzugt wird zur Ermittlung des Kennwerts der zeitlichen Stabilität die Varianz der einzelnen Vegetationsindexwerte des einen oder der mehreren ersten und des einen oder der mehreren zweiten Zeitpunkte berechnet.

Gemäß einer vorteilhaften Ausgestaltung des Verfahrens und Systems ist vorgesehen, dass die Teilbereiche des Schlags jeweils einem Pixel der Satellitenbilddaten entsprechen. Eine derartige Ausgestaltung bietet den Vorteil, dass die maximale Auflösung der Satellitenbilddaten ausgenutzt werden kann, um möglichst kleine Teilbereiche des Schlags zu bilden. Alternativ kann vorgesehen sein, dass die Teilbereiche des Schlags jeweils mehreren Pixeln der Satellitenbilddaten entsprechen. Bevorzugt ist die Anzahl an Pixeln der Satellitenbilddaten, die einem Teilbereich des Schlags zugeordnet sind, einstellbar, so dass ein Benutzer des Verfahrens bzw. des Systems die Anzahl festlegen kann.

Als vorteilhaft hat es sich bei dem erfindungsgemäßen Verfahren erwiesen, wenn die Biomasse Kulturpflanzen, insbesondere Zuckerrüben, aufweist und/oder der landwirtschaftliche Schlag ein Kulturpflanzenschlag, insbesondere ein Zuckerrübenschlag, ist.

Eine vorteilhafte Ausgestaltung des Verfahrens und Systems sieht vor, dass in der Anzeigevorrichtung zusätzlich ein Standort eines Benutzers angezeigt wird. Eine solche Ausgestaltung bietet den Vorteil, dass der Benutzer der Anzeigevorrichtung seinen eigenen Standort in Relation zu den ausgewählten Teilbereichen setzen kann. Es wird dem Benutzer daher erleichtert, die ausgewählten Teilbereiche aufzufinden, um in diesen Teilbereichen des Schlags gezielt eine Probenahme durchzuführen. Besonders bevorzugt werden in der Anzeigevorrichtung Hinweise zum Navigieren zu den ausgewählten Teilbereichen des Schlags angezeigt, beispielsweise in Form von Routeninformationen oder Richtungsanzeigen.

Eine vorteilhafte Ausgestaltung des erfindungsgemäßen Systems sieht vor, dass das System ein mobiles Endgerät umfasst, und die Anzeigeeinrichtung und/oder die Prozessoreinrichtung Teil des mobilen Endgeräts ist. Bei einer Ausgestaltung mit einer Anzeigeeinrichtung als Teil des mobilen Endgeräts ist es möglich, dass der Benutzer des Systems die Anzeigeeinrichtung mitführt, während er sich innerhalb des Schlags aufhält. Dem Benutzer wird dadurch das Auffinden der ausgewählten Teilbereiche weiter erleichtert. Die Prozessoreinrichtung kann extern des mobilen Geräts ausgebildet sein und die Anzeigedaten können zur Anzeige auf der Anzeigeeinrichtung des mobilen Geräts an dieses übermittelt werden. Alternativ kann die Prozessoreinrichtung ebenfalls Teil des mobilen Endgeräts sein, sodass die Auswahl und die Anzeige der Teilbereiche mit den Mitteln des mobilen Endgeräts erfolgt.

Ein weiterer Gegenstand der Erfindung ist ein Verfahren zur Vorhersage eines Ertrags eines landwirtschaftlichen Schlags, wobei in einem ausgewählten Teilbereich des Schlags eine Probe von Biomasse entnommen wird und anhand der entnommenen Biomasse ein voraussichtlicher Ertrag des Schlags berechnet wird, wobei zur Auswahl des Teilbereichs des Schlags ein vorstehend beschriebenes Verfahren durchgeführt wird.

Bei dem Verfahren zur Vorhersage können dieselben Vorteile erreicht werden, die bereits im Zusammenhang mit dem Verfahren und System zur Auswahl eines oder mehrerer Teilbereiche eines Schlags beschrieben worden sind.

Als vorteilhaft hat sich das Verfahren zur Vorhersage in solchen Ausgestaltungen erwiesen, in welchen der landwirtschaftliche Schlag ein Kulturpflanzenschlag, insbesondere ein Zuckerrübenschlag, ist.

Alternativ oder zusätzlich können die im Zusammenhang mit dem Verfahren zur Auswahl eines oder mehrerer Teilbereiche eines Schlags beschriebenen vorteilhaften Ausgestaltungen und Merkmale allein oder in Kombination auch bei dem Verfahren zur Vorhersage Anwendung finden.

Weitere Einzelheiten, Merkmale und Vorteile der Erfindung ergeben sich aus den Zeichnungen, sowie aus der nachfolgenden Beschreibung einer bevorzugten Ausführungsform anhand der Zeichnungen. Die Zeichnungen illustrieren dabei lediglich eine beispielhaft Ausführungsform der Erfindung, welche den Erfindungsgedanken nicht einschränkt.

## Kurze Beschreibung der Figuren

Die **Fig. 1** zeigt ein Ablaufdiagramm eines Ausführungsbeispiels eines erfindungsgemäßen Verfahrens zur Vorhersage eines Ertrags eines landwirtschaftlichen Schlags.

Die **Fig. 2** zeigt ein schematisches Blockdiagramm eines Ausführungsbeispiels eines erfindungsgemäßen Systems zur Auswahl eines oder mehrerer Teilbereiche eines landwirtschaftlichen Schlags für eine Probenahme von Biomasse.

## Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

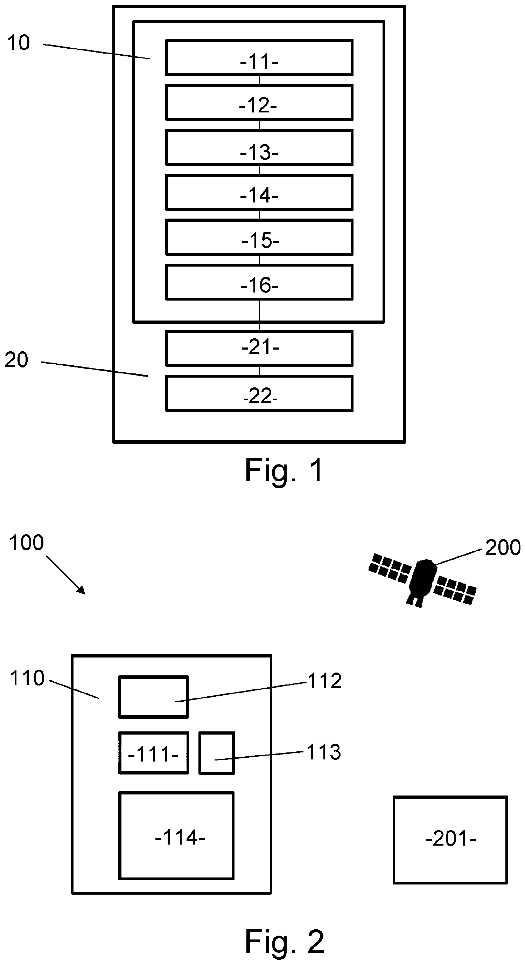

Das in **Fig. 1** dargestellte Ablaufdiagramm zeigt den Ablauf eines Verfahrens 20 zur Vorhersage eines Ertrags eines landwirtschaftlichen Schlags, bei welchem anhand der entnommenen Biomasse ein voraussichtlicher Ertrag des Schlags berechnet wird. Hierbei kommt ein Verfahren 10 zur Auswahl eines oder mehrerer Teilbereiche eines landwirtschaftlichen Schlags für eine Probenahme von Biomasse zur Anwendung, welches gemäß einem Ausführungsbeispiel der vorliegenden Erfindung ausgestaltet ist.

Bei dem landwirtschaftlichen Schlag kann es sich um einen Kulturpflanzenschlag handeln, also eine zusammenhängende Fläche, die einheitlich mit einer Kulturpflanze bebaut ist. Beispielsweise kann der Schlag ein Zuckerrübenschlag sein.

In einem ersten Verfahrensschritt 11 werden Satellitenbilddaten des Schlags zu mindestens einem ersten, beispielsweise aktuellen, Zeitpunkt und mindestens einem zweiten, beispielsweise historischen, Zeitpunkt bereitgestellt. Die Satellitenbilddaten können aus einer Speichereinrichtung abgerufen werden oder zumindest teilweise aktuell empfangen werden, beispielsweise von einem Satellitenbilddatendienst. Die Satellitenbilddaten sind dabei bevorzugt spektralaufgelöste Satellitenbilddaten, insbesondere im nah-infraroten und/oder roten Spektralbereich. Die Satellitenbilddaten weisen bevorzugt eine Auflösung mit einer Pixelgröße mit 5 m Kantenlänge oder mit 10 m Kantenlänge auf. Die Pixel der Satellitenbilddaten entsprechen jeweils einem Teilbereich des Schlags.

Die Satellitenbilddaten sind dabei bevorzugt derart gewählt, dass der mindestens eine erste und der mindestens eine zweite Zeitpunkt ein oder mehrere Jahre auseinander liegen. Wenn mehrere Satellitenbilddaten von mehreren ersten Zeitpunkten genutzt werden, so liegen diese ersten Zeitpunkte alle innerhalb derselben Vegetationsperiode des Schlags, beispielsweise innerhalb ein und demselben Jahr, bevorzugt im aktuellen Jahr. Sofern Satellitendaten von mehreren zweiten Zeitpunkten genutzt werden, so liegen diese zweiten Zeitpunkte jeweils ein oder mehrere Jahre auseinander. Das bedeutet, dass die zweiten Zeitpunkte mehrere bereits vergangene Vegetationsperioden des Schlags abdecken. Durch eine derartige Wahl des zeitlichen Abstands der zweiten Zeitpunkte können vergleichbare Zeitpunkte im Wachstum der Biomasse in verschiedenen Jahren miteinander zur Auswahl der Teilbereiche für die Probenahme herangezogen werden. Bei den Satellitenbilddaten kann es sich beispielsweise um Galileo-Satellitenbilddaten und/oder Landsat-Satellitenbilddaten handeln.

In einem der ersten Verfahrensschritt 11 nachfolgenden zweiten Verfahrensschritt 12 wird jeweils ein erster Vegetationsindexwert für mehrere, insbesondere sämtliche, Teilbereiche des Schlags anhand der Satellitenbilddaten des mindestens einen ersten Zeitpunkts ermittelt.

Ferner wird in einem dritten Verfahrensschritt 13 ein zweiter Vegetationsindexwerts für die Teilbereiche des Schlags anhand der Satellitenbilddaten des mindestens einen zweiten Zeitpunkts ermittelt. Der zweite und dritte Verfahrensschritt können in einer beliebigen Reihenfolge oder gleichzeitig ausgeführt werden.

Der erste Vegetationsindexwert und/oder der zweite Vegetationsindexwert werden der Definition des Enhanced Vegetation Index 2 (EVI2) ermittelt, wobei für den EVI2 insbesondere gilt:

$$EVI2 = 2{,}4 \cdot \frac{NIR - RED}{NIR + RED + 1{,}}$$

wobei NIR und RED jeweils der Reflexionswert der Erdoberfläche im Nahinfrarotband (NIR) und im roten Band (RED) sind, insbesondere unter vollständiger oder teilweiser Korrektur der Rayleigh- und Ozonabsorption.

In einem vierten Verfahrensschritt 14 wird dann ein Kennwert der zeitlichen Stabilität des Vegetationsindex für die Teilbereiche des Schlags ermittelt. Der Kennwert der zeitlichen Stabilität des Vegetationsindex wird bevorzugt anhand der Satellitenbilddaten des Schlags zu dem ersten Zeitpunkt und der Satellitenbilddaten des Schlags zu dem einen oder den mehreren zweiten Zeitpunkten ermittelt. Beispielsweise kann die Abweichung der einzelnen Vegetationsindexwerte des ersten und des einen oder der mehreren zweiten Zeitpunkte voneinander ermittelt werden, um den Kennwert der zeitlichen Stabilität zu erhalten. Bevorzugt wird zur Ermittlung des Kennwerts der zeitlichen Stabilität die Varianz der einzelnen Vegetationsindexwerte des einen oder der mehreren ersten Zeitpunkte und des einen oder der mehreren zweiten Zeitpunkte berechnet.

In einem fünften Verfahrensschritt 15 werden dann solche Teilbereiche des Schlags ausgewählt, die kumulativ folgende Voraussetzungen erfüllen:

- der erste Vegetationsindexwert liegt in einem vorgegebenen ersten Auswahl-Wertebereich,
- der zweite Vegetationsindexwert liegt in einem vorgegebenen zweiten Auswahl-Wertbereich,
- der Kennwert der zeitlichen Stabilität liegt in einem vorgegebenen dritten Auswahl-Wertbereich.

Dieser Auswahl liegt die Überlegung zugrunde, dass sich der voraussichtliche Ertrag aus der aktuell messbaren Biomasse - entsprechend dem ersten Vegetationsindexwert - herleiten lässt. Abgesichert wird dies über die in gleicher Weise ermittelten historischen Ertrag - entsprechend dem zweiten Vegetationsindexwert. Zur weiteren Absicherung werden Teilbereiche mit besonderer Stabilität der Biomasse in zeitlichem Maßstab betrachtet. Bereiche für die alle drei Kriterien kumulativ erfüllt sind, werden als repräsentativ für den Schlag betrachtet.

Die zur Auswertung herangezogenen Auswahl-Wertebereiche werden bevorzugt wie nachfolgend erläutert gewählt. Dabei wird aus den ermittelten ersten Vegetationsindexwerten für den gesamten Schlag ein maximaler erster Vegetationsindexwert ermittelt. Analog wird aus den ermittelten zweiten Vegetationsindexwerten für den gesamten Schlag ein maximaler zweiter Vegetationsindexwert ermittelt.

Der erste Auswahl-Wertebereich ist nach unten begrenzt durch einen ersten unteren Schwellenwert und nach oben begrenzt durch einen ersten oberen Schwellenwert. Das Verhältnis des ersten unteren Schwellenwerts zu dem maximalen ersten Vegetationsindexwert des Schlags ist größer als 0,2, bevorzugt größer als 0,25, besonders bevorzugt größer als 0,3, beispielsweise 0,33. Und ein Verhältnis des ersten oberen Schwellenwerts zu dem maximalen ersten Vegetationsindexwert des Schlags ist kleiner als 0,8, bevorzugt kleiner als 0,75, besonders bevorzugt kleiner als 0,7, beispielsweise 0,66.

Der zweite Auswahl-Wertebereich ist nach unten begrenzt durch einen zweiten unteren Schwellenwert und nach oben begrenzt durch einen zweiten oberen Schwellenwert, wobei ein Verhältnis des zweiten unteren Schwellenwerts zu dem maximalen zweiten Vegetationsindexwert des Schlags größer ist als 0,2, bevorzugt größer ist als 0,25, besonders bevorzugt größer ist als 0,3, beispielsweise 0,33 ist. Und ein Verhältnis des zweiten oberen Schwellenwerts zu dem maximalen zweiten Vegetationsindexwert des Schlags ist kleiner als 0,8, bevorzugt kleiner als 0,75, besonders bevorzugt kleiner als 0,7, beispielsweise 0,66.

Der dritte Auswahl-Wertebereich ist nach unten begrenzt durch einen dritten unteren Schwellenwert und nach oben begrenzt durch einen dritten oberen Schwellenwert, wobei ein Verhältnis des dritten unteren Schwellenwerts zu einem maximalen Kennwert der zeitlichen Stabilität des Schlags größer ist als 0,5, bevorzugt größer ist als 0,6, besonders bevorzugt größer ist als 0,65, beispielsweise 0,66 ist, und wobei ein Verhältnis des dritten oberen Schwellenwerts zu einem maximalen Kennwert der zeitlichen Stabilität des Schlags größer ist als 0,8, bevorzugt größer ist als 0,9, besonders bevorzugt größer ist als 0,95, beispielsweise 1 ist.

Schließlich werden in einem sechsten Verfahrensschritt 16 die ausgewählten Teilbereiche in einer Anzeigevorrichtung, insbesondere einem mobilen Endgerät, angezeigt. Optional kann in der Anzeigevorrichtung zusätzlich ein Standort eines Benutzers angezeigt werden. Dabei können in der Anzeigevorrichtung Navigationsinformationen angezeigt werden, die es dem Benutzer des mobilen Endgeräts erleichtern, den oder die ausgewählten Teilbereiche aufzufinden.

Sobald der Benutzer einen ausgewählten Teilbereich in dem Schlag aufgefunden hat, wird in Verfahrensschritt 21 in dem ausgewählten Teilbereich des Schlags eine Probe von Biomasse entnommen. Die Probenahme kann für mehrere Teilbereiche des Schlags durchgeführt werden, insbesondere für alle mit dem Verfahren 10 ausgewählten Teilbereiche.

In einem nachfolgenden Verfahrensschritt 22 wird dann anhand der entnommenen Biomasse ein voraussichtlicher Ertrag des Schlags berechnet. Da bei dem erfindungsgemäßen Verfahren eine für den jeweiligen Schlag möglichst repräsentative Auswahl der Bereiche für die Probenahme ermöglicht wird, ist die Genauigkeit der Vorhersage des landwirtschaftlichen Ertrags auf Basis der Probenahme verbessert.

Die Darstellung in **Fig. 2** zeigt ein Blockdiagramm eines Systems 100 zur Auswahl eines oder mehrerer Teilbereiche eines landwirtschaftlichen Schlags für eine Probenahme von Biomasse gemäß einem Ausführungsbeispiel der Erfindung. Das System 100 umfasst ein mobiles Endgerät 110 mit einer Anzeigeeinrichtung 114, beispielsweise ein Smartphone oder einen Tablet-Computer. Ein weiterer Bestandteil des Systems 100, bei dem Ausführungsbeispiel auch des Endgeräts 110, ist eine Prozessoreinrichtung 111, die dazu konfiguriert ist:

- Satellitenbilddaten des Schlags zu mindestens einem ersten, beispielsweise aktuellen, Zeitpunkt und mindestens einem zweiten, beispielsweise historischen, Zeitpunkt zu erhalten,

- anhand der Satellitenbilddaten des mindestens einen ersten Zeitpunkts jeweils einen ersten Vegetationsindexwert für mehrere, insbesondere sämtliche, Teilbereiche des Schlags zu ermitteln,

- anhand der Satellitenbilddaten des mindestens einen zweiten Zeitpunkts jeweils einen zweiten Vegetationsindexwert für die Teilbereiche des Schlags zu ermitteln,

- einen Kennwert der zeitlichen Stabilität des Vegetationsindex für die Teilbereiche des Schlags zu ermitteln,

- solcher Teilbereiche des Schlags auszuwählen, die kumulativ folgende Voraussetzungen erfüllen:

    ○ der erste Vegetationsindexwert liegt in einem vorgegebenen ersten Auswahl-Wertebereich,
    ○ der zweite Vegetationsindexwert liegt in einem vorgegebenen zweiten Auswahl-Wertbereich,
    ○ der Kennwert der zeitlichen Stabilität liegt in einem vorgegebenen dritten Auswahl-Wertbereich.

Die Anzeigeeinrichtung 114 ist dazu konfiguriert, die ausgewählten Teilbereiche anzuzeigen. Bei dem Ausführungsbeispiel ist die Prozessoreinrichtung 111 mit einer Speichereinrichtung 112 verbunden, in dem zumindest ein Teil der Satellitenbilddaten gespeichert sein kann. Ferner ist die Prozessoreinrichtung 11 mit einer Kommunikationsschnittstelle 113 verbunden, über welche zumindest ein Teil der Satellitenbilddaten empfangen werden kann. Der Empfang der Satellitenbilddaten über die Kommunikationsschnittstelle 114 des mobilen Endgeräts 110 kann direkt von einem Satellit 200 oder von einem Satellitenbilddaten-Server 201 des Systems erfolgen.

Durch das vorstehend beschriebene Verfahren und System kann die Vorhersage des landwirtschaftlichen Ertrags des Schlags verbessert werden.

**Bezugszeichenliste**

| | |
|---|---|
| 10 | Verfahren zur Auswahl eines oder mehrerer Teilbereiche |
| 11-16 | Verfahrensschritt |
| 20 | Verfahren zur Vorhersage eines Ertrags eines landwirtschaftlichen Schlags |
| 21-22 | Verfahrensschritt |
| | |
| 100 | System |
| 110 | mobiles Endgerät |
| 111 | Prozessoreinrichtung |
| 112 | Speichereinrichtung |
| 113 | Kommunikationsschnittstelle |
| 114 | Anzeigeeinrichtung |
| 200 | Satellit |
| 201 | Satellitenbilddaten-Server |

**Patentansprüche**

1. Verfahren zur Auswahl eines oder mehrerer Teilbereiche eines landwirtschaftlichen Schlags für eine Probenahme von Biomasse mit folgenden Verfahrensschritten:

    - Bereitstellen von Satellitenbilddaten (11) des Schlags zu mindestens einem ersten, beispielsweise aktuellen, Zeitpunkt und mindestens einem zweiten, beispielsweise historischen, Zeitpunkt,
    - Ermitteln jeweils eines ersten Vegetationsindexwerts (12) für mehrere, insbesondere sämtliche, Teilbereiche des Schlags anhand der Satellitenbilddaten des mindestens einen ersten Zeitpunkts,
    - Ermitteln jeweils eines zweiten Vegetationsindexwerts (13) für die Teilbereiche des Schlags anhand der Satellitenbilddaten des mindestens einen zweiten Zeitpunkts,
- Ermitteln eines Kennwerts der zeitlichen Stabilität (14) des Vegetationsindex für die Teilbereiche des Schlags,
- Auswählen (15) solcher Teilbereiche des Schlags, die kumulativ folgende Voraussetzungen erfüllen:

　◦ der erste Vegetationsindexwert liegt in einem vorgegebenen ersten Auswahl-Wertebereich,
　◦ der zweite Vegetationsindexwert liegt in einem vorgegebenen zweiten Auswahl-Wertbereich,
　◦ der Kennwert der zeitlichen Stabilität liegt in einem vorgegebenen dritten Auswahl-Wertbereich;

und
- Anzeigen (16) der ausgewählten Teilbereiche in einer Anzeigevorrichtung (114), insbesondere eines mobilen Endgeräts (110).

2. Verfahren nach Anspruch 1, **dadurch gekennzeichnet, dass** der erste Auswahl-Wertebereich nach unten begrenzt ist durch einen ersten unteren Schwellenwert und nach oben begrenzt ist durch einen ersten oberen Schwellenwert,

　wobei ein Verhältnis des ersten unteren Schwellenwerts zu einem maximalen ersten Vegetationsindexwert des Schlags größer ist als 0,2, bevorzugt größer ist als 0,25, besonders bevorzugt größer ist als 0,3, beispielsweise 0,33 ist, und wobei ein Verhältnis des ersten oberen Schwellenwerts zu einem maximalen ersten Vegetationsindexwert des Schlags kleiner ist als 0,8, bevorzugt kleiner ist als 0,75, besonders bevorzugt kleiner ist als 0,7, beispielsweise 0,66 ist.

3. Verfahren nach einem der vorhergehenden Ansprüche, **dadurch gekennzeichnet, dass** der zweite Auswahl-Wertebereich nach unten begrenzt ist durch einen zweiten unteren Schwellenwert und nach oben begrenzt ist durch einen zweiten oberen Schwellenwert,

　wobei ein Verhältnis des zweiten unteren Schwellenwerts zu einem maximalen zweiten Vegetationsindexwert des Schlags größer ist als 0,2, bevorzugt größer ist als 0,25, besonders bevorzugt größer ist als 0,3, beispielsweise 0,33 ist, und wobei ein Verhältnis des zweiten oberen Schwellenwerts zu einem maximalen zweiten Vegetationsindexwert des Schlags kleiner ist als 0,8, bevorzugt kleiner ist als 0,75, besonders bevorzugt kleiner ist als 0,7, beispielsweise 0,66 ist.

4. Verfahren nach einem der vorhergehenden Ansprüche, **dadurch gekennzeichnet, dass** der dritte Auswahl-Wertebereich nach unten begrenzt ist durch einen dritten unteren Schwellenwert und nach oben begrenzt ist durch einen dritten oberen Schwellenwert,

　wobei ein Verhältnis des dritten unteren Schwellenwerts zu einem maximalen Kennwert der zeitlichen Stabilität des Schlags größer ist als 0,5, bevorzugt größer ist als 0,6, besonders bevorzugt größer ist als 0,65, beispielsweise 0,66 ist, und
　wobei ein Verhältnis des dritten oberen Schwellenwerts zu einem maximalen Kennwert der zeitlichen Stabilität des Schlags größer ist als 0,8, bevorzugt größer ist als 0,9, besonders bevorzugt größer ist als 0,95, beispielsweise 1 ist.

5. Verfahren nach einem der vorhergehenden Ansprüche, **dadurch gekennzeichnet, dass** der erste Vegetationsindexwert und/oder der zweite Vegetationsindexwert gemäß der Definition des Enhanced Vegetation Index 2 (EVI2) ermittelt wird.

6. Verfahren nach einem der vorhergehenden Ansprüche, **dadurch gekennzeichnet, dass** Satellitenbilddaten zu mindestens zwei, bevorzugt mindestens fünf, besonders bevorzugt mindestens zehn, ersten Zeitpunkten bereitgestellt werden und der zweite Vegetationsindexwert anhand von Satellitenbilddaten von mindestens drei, bevorzugt mindestens fünf, besonders bevorzugt mindestens zehn, ersten Zeitpunkten, ermittelt wird.

7. Verfahren nach einem der vorhergehenden Ansprüche, **dadurch gekennzeichnet, dass** Satellitenbilddaten zu mindestens zwei, bevorzugt mindestens fünf, besonders bevorzugt mindestens zehn, zweiten Zeitpunkten bereitgestellt werden und der zweite Vegetationsindexwert anhand von Satellitenbilddaten von mindestens drei, bevorzugt mindestens fünf, besonders bevorzugt mindestens zehn, zweiten Zeitpunkten, ermittelt wird.

8. Verfahren nach einem der vorhergehenden Ansprüche, **dadurch gekennzeichnet, dass** der Kennwert der zeitlichen Stabilität des Vegetationsindex anhand der Satellitenbilddaten des Schlags zu dem einen oder den mehreren ersten Zeitpunkten und der Satellitenbilddaten des Schlags zu dem einen oder den mehreren zweiten Zeitpunkten ermittelt wird.

9. Verfahren nach einem der vorhergehenden Ansprüche, **dadurch gekennzeichnet, dass** die Teilbereiche des Schlags jeweils einem Pixel der Satellitenbilddaten entsprechen.

10. Verfahren nach einem der vorhergehenden Ansprüche, **dadurch gekennzeichnet, dass** die Biomasse Kulturpflanzen, insbesondere Zuckerrüben, aufweist und/oder der landwirtschaftliche Schlag ein Kulturpflanzenschlag, insbesondere ein Zuckerrübenschlag, ist.

11. Verfahren nach einem der vorhergehenden Ansprüche, **dadurch gekennzeichnet, dass** in der Anzeigevorrichtung (114) zusätzlich ein Standort eines Benutzers angezeigt wird.

12. Verfahren zur Vorhersage eines Ertrags eines landwirtschaftlichen Schlags (20), wobei in einem ausgewählten Teilbereich des Schlags eine Probe von Biomasse entnommen wird (21) und anhand der entnommenen Biomasse ein voraussichtlicher Ertrag des Schlags berechnet (22) wird, wobei zur Auswahl des Teilbereichs des Schlags ein Verfahren (10) nach einem der vorhergehenden Ansprüche durchgeführt wird.

13. Verfahren nach Anspruch 12, **dadurch gekennzeichnet, dass** der landwirtschaftliche Schlag ein Kulturpflanzenschlag, insbesondere ein Zuckerrübenschlag, ist.

14. System (100) zur Auswahl eines oder mehrerer Teilbereiche eines landwirtschaftlichen Schlags für eine Probenahme von Biomasse mit einer Prozessoreinrichtung (111), die dazu konfiguriert ist:

- Satellitenbilddaten des Schlags zu mindestens einem ersten, beispielsweise aktuellen, Zeitpunkt und mindestens einem zweiten, beispielsweise historischen, Zeitpunkt zu erhalten,
- Anhand der Satellitenbilddaten des mindestens einen ersten Zeitpunkts jeweils einen ersten Vegetationsindexwert für mehrere, insbesondere sämtliche, Teilbereiche des Schlags zu ermitteln,
- anhand der Satellitenbilddaten des mindestens einen zweiten Zeitpunkts jeweils einen zweiten Vegetationsindexwert für die Teilbereiche des Schlags zu ermitteln,
- einen Kennwert der zeitlichen Stabilität des Vegetationsindex für die Teilbereiche des Schlags zu ermitteln,
- solcher Teilbereiche des Schlags auszuwählen, die kumulativ folgende Voraussetzungen erfüllen:

  ∘ der erste Vegetationsindexwert liegt in einem vorgegebenen ersten Auswahl-Wertebereich,
  ∘ der zweite Vegetationsindexwert liegt in einem vorgegebenen zweiten Auswahl-Wertbereich,
  ∘ der Kennwert der zeitlichen Stabilität liegt in einem vorgegebenen dritten Auswahl-Wertbereich,

und mit einer Anzeigeeinrichtung (114), die dazu konfiguriert ist, die ausgewählten Teilbereiche anzuzeigen.

15. System (100) nach Anspruch 14, **dadurch gekennzeichnet, dass** das System (100) ein mobiles Endgerät (110) umfasst, und die Anzeigeeinrichtung (114) und/oder die Prozessoreinrichtung (111) Teil des mobilen Endgeräts (110) ist.

Fig. 1

Fig. 2

Europäisches
Patentamt

European
Patent Office

Office européen
des brevets

## EUROPÄISCHER RECHERCHENBERICHT

Nummer der Anmeldung

EP 21 15 7782

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GeoPard Agriculture: "GeoPard Agriculture, Nov 2019 Edition", , 4. November 2019 (2019-11-04), Seiten 1-8, XP054982104, Gefunden im Internet: URL:https://www.youtube.com/watch?v=m5EEWDvoJNM [gefunden am 2021-08-02] * das ganze Dokument * ----- | 1-15 | INV. G06K9/00 G06Q50/02 G06Q10/04 |

RECHERCHIERTE SACHGEBIETE (IPC)

G06K
G06Q

Der vorliegende Recherchenbericht wurde für alle Patentansprüche erstellt

| Recherchenort | Abschlußdatum der Recherche | Prüfer |
|---|---|---|
| München | 11. August 2021 | Thielemann, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)